# EUROPEAN PATENT APPLICATION

(11) **EP 4 009 039 A1**
(43) Date of publication of application: **08.06.2022**
(21) Application number: 20211329.6
(22) Date of filing: 02.12.2020
(51) Int. Cl.: G01N 21/88, G01N 21/552

(54) **METHOD AND SYSTEM FOR OBSERVING PARTICLES ON A SURFACE**

(71) Applicant: Nederlandse Organisatie voor toegepast- natuurwetenschappelijk Onderzoek TNO, 2595 DA 's-Gravenhage (NL)
(72) Inventor: Van der Walle, Peter, 2595 DA 's-Gravenhage (NL); Van der Donck, Jacques Cor Johan, 2595 DA 's-Gravenhage (NL)
(74) Representative: V.O.

(57) **Abstract**

A system observes and counts particles that have landed on a surface under inspection (10). A prism (16) located under the plane of the surface under inspection supplies light from a light source (12) under the plane to the surface under inspection at a grazing angle. The prism has a first surface that forms the surface under inspection, or a support of the surface under inspection. The prism has further surfaces to pass the grazing light into and out of the prism before and after reflection from the surface under inspection. The prism has an image output surface for passing light that has been scattered from particles on the surface under inspection to an image detector/camera (14). The angle between the normal to this image output surface and the surface under inspection is preferably between fifteen and seventy five degrees, or at least less than ninety degrees. The range of directions within which no total internal reflection occurs from the image output surface preferably includes the angle of maximum scattering form the surface under inspection (about forty degrees from the normal to the surface under inspection).

## Description

The invention relates to a method and system for observing particles on a surface.

### Background

WO 2020013699 discloses a method of observing particles on a surface by means of scattering of light that illuminates the surface under a grazing angle. A camera is used to capture an image of the surface from a non-perpendicular direction that differs from the direction of specular reflection of the grazing illumination. Absent further reflection and scattering, the light captured by the camera is due only to scattering by the particles. Thus, an image is obtained that is highly sensitive to particles, while leaving free access to the surface from the perpendicular direction, e.g. for the beam of a photolithographic apparatus.

In the preferred embodiment of WO 2020013699 the particles, the light source and the camera are located on the same side of the plane that contains the surface. But WO 2020013699 also discloses an embodiment wherein a light source and/or a camera on the opposite side of that plane are additionally used. When the surface is the top surface of a transparent layer, this makes it possible to distinguish particles on opposite sides of the layer and holes through the layer. A particle produces the strongest light detection in images obtained with a light source and a camera on the same side of the layer as the particle. A hole also produces detection in these images, but also in images produced with a light source and a detection device on opposite sides of the layer. If only particles on one surface of the layer need to be detected, only a light source and a camera on the side of that surface are needed.

A device for observing particles on a surface may be used for example to monitor a space for the presence of particles. The average number of particles that lands on the surface during a unit time period can be used as an indication of the number particles in the space above the surface. In one example this can be used to monitor the air in a clean room or a processing chamber for particles. Other applications of such a device include monitoring progress of a particle deposition or printing process.

The device of WO 2020013699 has the disadvantage that the light source and/or the camera may obstruct access to the space above the surface. Because the camera of WO 2020013699 does not view the surface from a direction perpendicular to the surface, access from that direction is possible. But access along lateral directions may be obstructed.

Among others, it is an object to provide for sensitive imaging of light that has been scattered by particles on the surface with little or no obstruction of access to the space above the surface when imaging is performed.

A system according to claim 1 is provided for observing particles that have landed on a surface under inspection on a first side of a plane of the surface under inspection (e.g. from a half-space above said plane). The system uses optical elements including a light source, a prism and an image detector a prism located on a second side of said plane (e.g. in a half-space underneath said plane). Preferably all elements in the light path from the light source to the image detector are located on the second side, but optionally some low height elements in the light path, such as an optional reflector in between the light source and the prism, may at least partly located on the first side. The prism is configured to provide forward scattering of light from the surface under inspection to the image detector. A first surface of the prism forms the surface under inspection, or the surface under inspection may be a surface of a (preferably replaceable) layer on the first surface the surface The prism has different further surfaces, respectively to transmit light from the light source at a grazing angle to the surface under inspection, to receive all direct reflections of that light from the surface under inspection and to supply scattered light from the surface under inspection to the image detector. The surface used to supply the scattered light to the image detector is at an angle to the surface under inspection to improve transmission of the scattered light.

In an embodiment the surface used to supply the scattered light to the image detector is oriented perpendicular to the axis of the optical path from the prism to the image detector.

Preferably, the angle between the normal to the third surface and the normal to the surface under inspection is greater than the critical angle for total internal reflection of the prism. This prevents that light that is perpendicularly incident on the surface under inspection can perturb the measurements by reaching the image detector.

Preferably, the angle between the normal to the third surface and the direction of maximum scattering intensity of the light from the light source by particles on the surface under inspection is smaller than the critical angle for total internal reflection of the prism. In this way, scattering from the scattering peak can reach the image detector, so that high sensitivity is realized.

In an embodiment the surface the angle between the surface under inspection and the normal to the surface used to supply the scattered light to the image detector is greater than fifteen degrees and the angles to the normal of the surfaces used to transmit light from the light source at a grazing angle to the surface under inspection and to receive all direct reflections of that light from the surface under inspection are less than fifteen degrees.

In an embodiment the angle between the surface under inspection and the normal to the surface used to supply the scattered light to the image detector is between fifteen degrees and forty-five degrees, and preferably thirty degrees.

Preferably, the surface to receive all direct reflections of that light from the surface under inspection is perpendicular to the direction of reflections (of the light from the surface under inspection or at least one of such directions). This reduces disturbance of the image due to reflection from this surface. However, in another embodiment, surface to receive all direct reflections lies in the same plane as the third surface and hence has same orientation as the third surface. In a further or alternative embodiment, the system comprises a light absorber or light shield facing the surface that receives all direct reflections of that light and/or light absorbing material in the prism outside the optical path to the image detector, in a further optical path of reflection of the light by the surface under inspection to the surface that receives all direct reflections of that light. This also reduces disturbance. Preferably, whatever the orientation of the surface to receive all direct reflections, the distance from the surface under inspection to the closest point on the third surface in the detection range of the image detector is larger than the highest distance from the surface under inspection that can be reached by reflection of the light from the light source from the surface under inspection, at least at the position of the third surface.

In an embodiment the system comprises a processing circuit configured to compute an indication of a number of locations in the image of the surface under inspection from which scattering occurs. This number and/or its rate of change can be used to monitor the number of particles on the first side of the surface under inspection.

The processing circuit may be configured to display and/or store an indication of a number of locations in the image of the surface under inspection from which scattering occurs or a time sequence of such indications. In an embodiment the processing circuit is configured to generate an alarm signal when said indication exceeds a first predetermined threshold and/or when a rate of change of said indication exceeds a second predetermined threshold.

In an embodiment the light source comprises a collimator configured to collimate the light transmitted to the prism. This ensures that the angle of incidence on the surface under inspection is everywhere the same. This reduces potential disturbance.

In an embodiment the image detector comprises a tele-centric objective configured to form an image of the surface under inspection using parallel rays of scattered light from different positions on the surface under inspection. This limits the number of directions along which scattering is detected, thereby reducing disturbance.

In an embodiment the image detector comprises an imaging plane in a Scheimpflug relation to the surface under inspection. In this way an image wherein, the surface under inspection is entirely in focus can be captured at a single time point, giving a complete image of all particles that have landed up to that time.

In an embodiment the system is used to monitor a particle concentration in a space above the surface under inspection, using a count of scattering positions on the surface under inspection as an indication of the particle concentration.

Thus, the third surface forms an image output surface for passing light that has been scattered from particles on the surface under inspection. The second and fourth surfaces are for passing the grazing light into and out of the prism before and after reflection from the surface under inspection. The angle between the normal to this image output surface and the surface under inspection is preferably between fifteen and seventy five degrees, or at least less than ninety degrees. The range of directions within which no total internal reflection occurs from the image output surface preferably includes the angle of maximum scattering form the surface under inspection (about forty degrees from the normal to the surface under inspection). The range of directions within which no total internal reflection occurs from the image output surface preferably excludes the direction to the normal to the surface under inspection.

### Brief description of the drawing

These and other objects and advantageous aspects will become apparent from a detailed description of exemplary embodiments, with reference to the following figures.
- Figure 1: shows a cross section of a particle imaging device
- Figure 1a: shows a detail of an alternative
- Figure 2: shows reflection angles
- Figure 2a: shows a graph of scattering
- Figure 2b: shows a graph of refraction intensity
- Figure 3: shows a device with folded imaging optics
- Figure 3a: shows a device with folded lighting optics
- Figure 4: shows a device with a multi-facetted prism

### Detailed description of exemplary embodiments

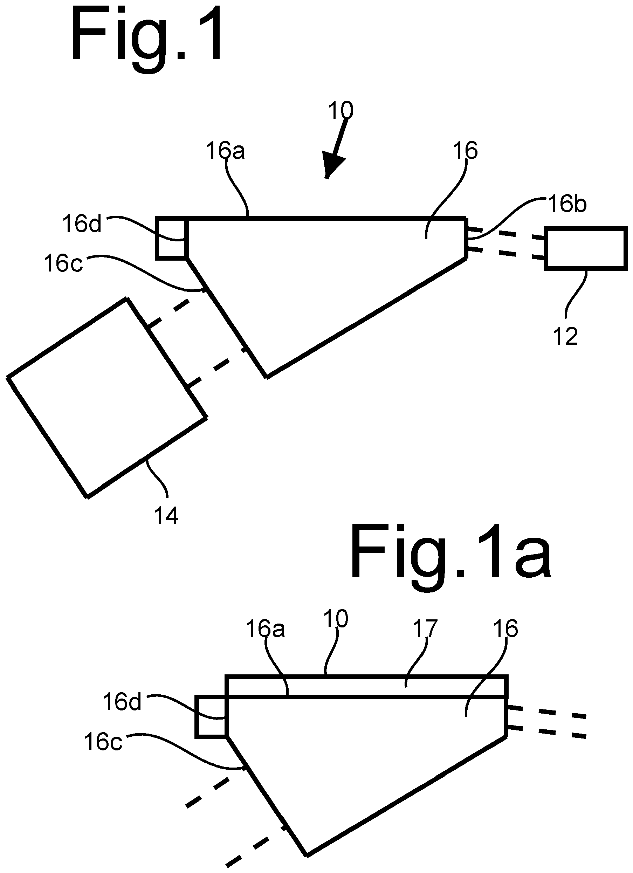

Figure 1 shows a cross section of an imaging device for imaging the locations of particles on a surface under inspection 10. The particles can reach surface under inspection 10 from a first side of a plane of surface under inspection 10. The surface under inspection may length and width of a few centimeter, but these dimensions are not critical. A light source 12, an image detector 14 and a prism 16 are located on a second side of that plane. (Herein the "plane of a surface" refers to a mathematical plane of infinite extension that is tangent to surface under inspection 10, i.e. that contains the surface under inspection 10 when surface under inspection 10 is flat; this plane divides space in two halves, of which the relation to the plane are referred to as on the first side and on the second side of the plane). In a preferred embodiment, the first side is above the plane of surface under inspection 10 in the sense that the force of gravity on the first side of that plane at least has a direction component towards that plane.

Prism 16 is made of a material that is transparent at least at the wavelength(s) of the light from light source 12, and has a higher index of refraction than its environment, which is usually air or vacuum. Prisms 16 extends in the direction perpendicular to the plane of the cross-section of figure 1, having the same cross-section with different planes perpendicular to that direction. Prism 16 has a plurality of surfaces under different orientations. In an embodiment a first surface 16a forms the surface under inspection 10. A second surface 16b of prism 16 forms an input for light from light source 12. A third surface 16c is used to provide light to image detector 14. A fourth surface 16d is used to pass out unused light from prism 16.

Figure 1a shows an alternative, wherein a replaceable transparent layer 17 is present on first surface 16a of prism 16, the top surface of transparent layer 17 forming the surface under inspection. The material of replaceable transparent layer 17 may have the same index of refraction as prism 16, or at least an index of refraction that allows the light from light source 12 to pass from prism 16 to layer 17. In other embodiments one or more layers like layer 17 may be a permanent part of prism 16.

In operation, light is supplied to surface under inspection 10 from light source 12 through prism 16, at a grazing angle with surface under inspection 10. The grazing angle is so small that total internal reflection occurs surface under inspection 10, except where particles are present on surface under inspection 10. All reflected light proceeds to fourth surface 16d where it leaves prism 16, and/or is absorbed.

Scattering occurs where particles are present on surface under inspection 10. Scattering produces light intensity in other directions than that of reflection from surface under inspection 10. Scattered light reaches third surface 16c and is used to form an image of surface under inspection 10 through third surface 16c. The construction of prism 16 makes it possible to keep the entire light path that is used for the inspection on the second side of the plane of surface under inspection 10. This avoids the need for inspection related structures above that surface under inspection 10, leaving free space that may be used for other equipment.

Preferably, second surface 16b is substantially perpendicular to the direction of the incoming light, Light source 12 may comprise a collimator lens, to ensure that the angle between the direction of the incoming light is independent of the position where the incoming light reaches surface under inspection 10. In this case second surface 16b may be perpendicular to the light direction defined by the collimator lens. But instead second surface 16b may be perpendicular to first surface 16a, or at any angle so that the angle between the light from light source 12 and the normal to second surface 16b is below a threshold angle of for example ten degrees, or five degrees.

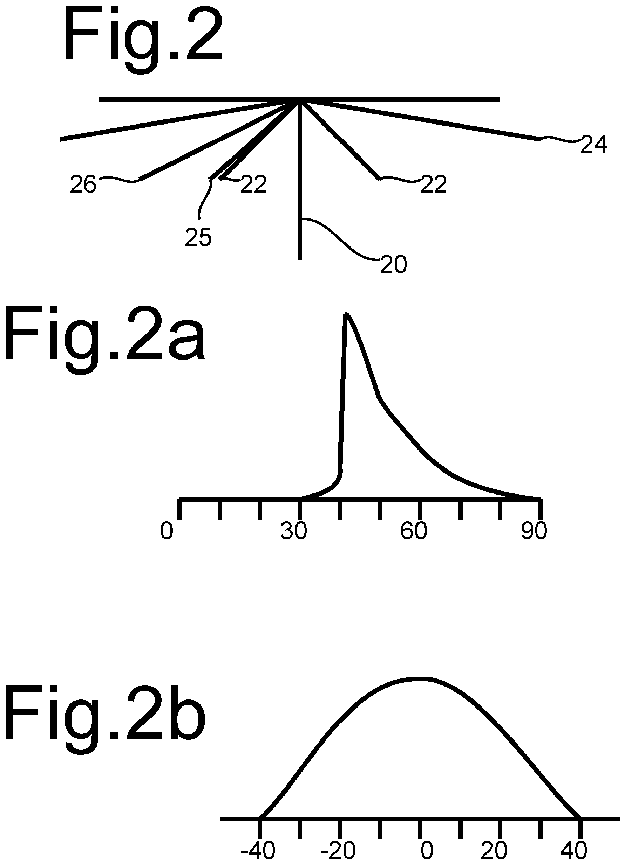

Figure 2 illustrates the relevant light directions relative to the direction of surface under inspection 10. The horizontal direction in Figure 2 is a direction parallel to surface under inspection 10. Prism has a higher index of refraction than its environment. The index of refraction ratio defines critical angles 20 relative to the normal 22 to surface under inspection 10 beyond which total internal reflection from surface under inspection 10 occurs.

Total internal reflection from surface under inspection 10 occurs for light directions in a range of angles that includes the grazing angle(s) 24 of the light from light source 12. The normal of second surface 16b may be at the same angle 24, or at a zero angle to surface under inspection 10 for example. The incoming light leads to maximum scattering in a direction 25. The normal of third surface 16c has an angle 26 to surface under inspection 10 that is larger than the grazing angle(s) 24 of the light from light source 12, e.g. a thirty-degree angle, or an angle between zero and sixty degrees, or more preferably between fifteen and forty-five degrees (note that the angle between third surface 16c and surface under inspection 10 equals ninety degrees minus the angle between the normal to third surface 16c and surface under inspection 10. Thus, third surface 16c is at a non-zero angle to surface under inspection 10 (e.g. at a sixty-degree angle, or at an angle between thirty and ninety degrees, and more preferably between forty-five and seventy-five degrees).

Figure 2a shows a first graph 28 of the intensity of light scattered by particles on surface under inspection 10 as a function of angle between the direction of propagation of that scattered light and the normal 20 to surface under inspection 10. Angles between normal 20 and scattered light with a direction component parallel to the surface under inspection in the same direction as the incoming light are shown as positive angles, i.e. positive as angles correspond to forward scattering. As may be noted, the scattering intensity is maximal at a forward scattering angle (direction 25 in figure 2) slightly above forty degrees to the normal to surface under inspection 10 and most of the other scattering intensity occurs at greater angles than the angle at which the scattering intensity is maximal. At most a small part of the scattering intensity is in the range of angles in the direction of reflected grazing light (greater than seventy five degrees, and more preferably greater than eighty degrees).

Figure 2b shows a graph 29 of the intensity of transmission of light through third surface 16c as a function of angle between the direction of propagation of that light in prism 16 and the direction of the normal to third surface 16c. Beyond the critical angle for total internal reflection (about forty degrees), the intensity of transmission is zero. The intensity of transmission is maximal at zero angle and decreases when the angle increases towards the critical angle.

The angle of third surface 16c is selected to provide high sensitivity imaging of forward scattering. In principle, some scattered light could be observed using a third surface 16c at zero angle to first surface 16a, e.g. when, instead of prism 16, a transparent layer with a back surface parallel to the surface under inspection would be used. However, as shown in figure 2a, most of the scattering intensity due to particles on surface under inspection 10 by far is forward scattering. Only a small part of the intensity of such forward scattered light would be passed through a back surface parallel to surface under inspection 10. Use of a non-zero angle between third surface 16c increases the intensity of forward scattered light provided to image detector 14. In addition, by reducing the angle between third surface 16c and the view direction(s) of image detector 14, it reduces the sensitivity to particles on third surface 16c.

Preferably, the orientation of third surface 16c is selected so that angle between the normal 26 to third surface 16c and the normal 20 to the surface under inspection 10 is greater than the critical angle of total internal reflection of prism 16 (for example the critical angle of total internal reflection may be about forty degrees). Thus, external light that is incident perpendicularly to the surface under inspection 10 cannot reach image detector 14.

By making the angle between the normal 26 to third surface 16c and the normal 20 to the surface under inspection 10 increasingly larger than the critical angle increasingly more light that is obliquely incident on surface under inspection 10 can be prevented from reaching image detector 14. At the same time, the angle between the normal 26 to third surface 16c and the direction of peak scattering (about forty degrees to normal 20 to the surface under inspection 10 increasingly larger than the critical angle increasingly more light that is obliquely incident on surface under inspection 10 can be prevented from reaching image detector 14.

Fourth surface 16d is configured to pass out direct reflection of the grazing light from surface under inspection 10 and, if need be, light from light source 12 that reaches fourth surface 16d without reflection. Preferably fourth surface 16d is directed perpendicular to the direction of such directly reflected light (or at least one of the direction of such directly reflected light). The third surface does not overlap with the fourth surface. Preferably image detector 12 is arranged so that no light in rays from the fourth surface contributes to the detected image or image detector 12, or at least such light does not contribute to particle detection.

Preferably the height H of fourth surface 16d (i.e. its greatest distance to the surface under inspection) is at least so high that it includes the greatest distance from first surface 16a at which directly reflected light reaches the position of fourth surface 16d (H>L*sin(alpha), where L is the length of surface under inspection 10 between second surface 16b and fourth surface 16d and alpha is the angle of incidence of the light from light source 12 on surface under inspection 10 in prism 16, or the greatest such angle). A light absorber or light shield (not shown) may be present following fourth surface 16d in the optical path of such light, or on fourth surface 16d to absorb all such light. In an embodiment, prism 16 may comprise a region of absorbing material to form a light absorber for this purpose, without absorbing light directed to third surface 16c.

The light that passes through third surface 16c is supplied to image detector 14. Preferably, image detector 14 comprises an image sensing device, e.g. a device with a planar array of pixel sensors and an optical system of one or more lenses and/or reflectors configured to project light received via third surface 16c on to the image sensing device. Preferably, the optical system is arranged to makes use of Scheimpflug imaging to focus light scattered from surface under inspection 10 on the image sensing device. Scheimpflug imaging is known per se and may be realized by arranging the sensing plane of the image sensing device at an oblique angle relative to the optical axis of the one or more lenses and/or reflectors, in correspondence with the angle between the optical axis and the surface under inspection 10. This makes it possible to sense particles on the entire surface under inspection. The optical system may be configured as a telecentric objective, so that light everywhere from surface under inspection 10 is imaged from the same direction.

Preferably, image detector 14 is arranged so that the direction(s) of grazing reflection of light from light source 12 by surface under inspection 10 is outside the range of directions of light from surface under inspection 10 that is imaged on the image sensing device.

Preferably, imaging device comprises a processing circuit coupled to the image sensing device of image detector 14, the processing circuit being configured to determine an indication of the number of particles present in an image captured at different times by image detector 14. A time sequence of indications from images obtained at different time points may be recorded.

Each indication may simply be a count of pixels at which more than a predetermined threshold intensity is detected in an image, or a sum of the intensities detected by the pixels. The processing circuit may comprise a computer programmed with a computer program to determine such an indication. Alternatively, the processing circuit may be configured to determine regions of connected pixels where more than a threshold intensity is detected and to determine the indication of the number of particles from a count of the number of regions. Methods of detecting connected regions in images are known per se in the field of image processing or computer vision.

The processing circuit may be configured to store and/or display the computed current indication and/or the time sequence of indications. In an embodiment, the processing circuit may be configured to generate an alarm signal when the indication exceeds the indication value for a predetermined threshold number of particles. Instead, or in addition, the processing circuit may be configured to generate an alarm signal when a rate of change of the indication exceeds a predetermined threshold.

In an embodiment the imaging may be performed using temporally modulated light from light source 12, which results in a corresponding temporal modulation of the image sensed by the image sensing device. In this embodiment, the processing circuit may be configured to form an image by detecting the temporal modulation amplitude as a function of position in the image sensed by the image sensing device, thereby obtaining a modulation image, and using the modulation images for different times to determine the indications of the number of particles present in images captured at the different times. For example, the light from light source 14 may be switched on and off as a function of time to obtain the modulation.

The imaging device may comprise a modulation circuit, such as a power switching circuit in the power supply to light source 12, or a controllable shutter in the light path from light source 12 to prism 16 for creating the modulation. Preferably, the modulation is synchronized to image sampling by the image sensing device (corresponding to its frame rate). The processing circuit may be configured to detect the modulation amplitude from the images sensed by the image sensing device on its own, or based on the timing of the modulation by light source 12, i.e. asynchronously or synchronously.

In an embodiment light source 12 is a polarized light source, or is configured to switch between supplying light with different polarizations. For example, a first polarization with an E field component in the plane of the cross-section of figure 1 and/or a second polarization perpendicular to that plane (i.e. in the length direction of prism 16) may be used. Similarly, a polarization filter may be used between prism 16 and image detector 14 or in image detector 14. A polarization filter that is switchable to different polarization directions may be used.

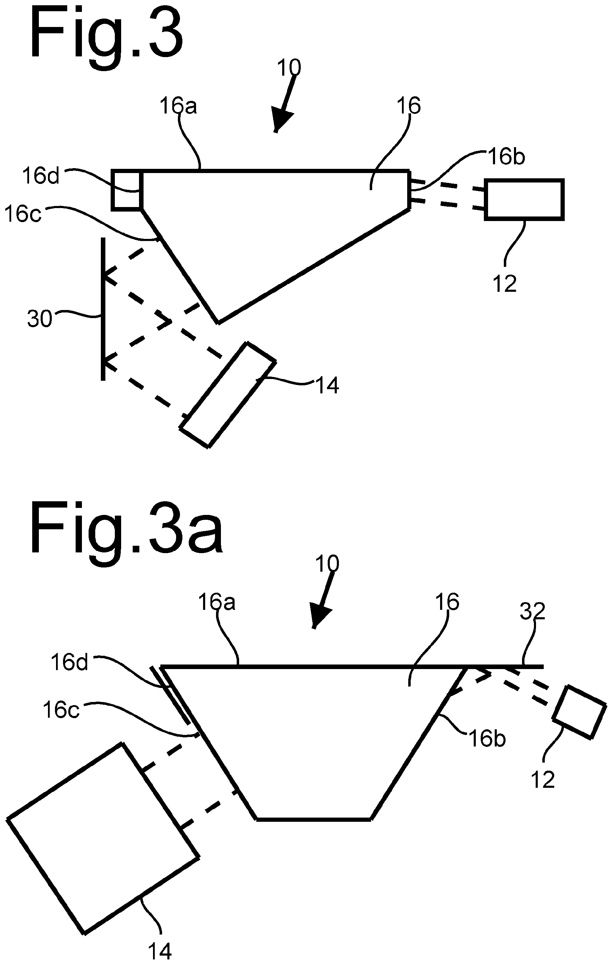

Figure 3 shows an embodiment with a first feature wherein a folded light path to image detector 14 is used. A mirror 30 is included that reflects light from third surface 16c to image detector 14. This can be used to make the device more compact, at least in the direction parallel to surface under inspection 10. More than one mirror may be used.

Figure 3a shows an embodiment with a second feature wherein third and fourth surface 16c, d have the same orientation When third and fourth surface 16c, d have the same orientation, the part of the light from prism 16 that is imaged on image detector is preferably limited to light from greater distances H as defined in the preceding. The part of prism 16 at lower height may be shielded by an absorber or a light shield.

Figure 3a shows an embodiment with a third feature wherein light from light source 12 is provided to prism 16 via a mirror 32 next to prism 16, in the plane of first surface 16a. Prism 16 refracts this light to a grazing angle or grazing angles within prism 16. Although mirror 32 next to prism 16 is shown in the plane of first surface 16a, so that no component is needed above that plane, it should be noted that instead mirror 32, or a similar reflecting device like a further prism may be located higher than the surface under inspection. Since such a mirror 32, or a similar reflecting device need not be as large as image detector 14 or light source 12, it forms at most a small access restriction to the space above the plane of surface under inspection 10. The first, second and third feature shown in figures 3, 3a may be used independent of one another.

Although a device has been shown wherein third surface 16c and second surface 16b are connected by a single further surface of prism 16 it should be appreciated that instead of the single further surface, a plurality of surfaces ate different orientations may be present in the connection between third surface 16c and second surface 16b. The connection may include a surface that is parallel to the surface under inspection.

Preferably, prism 16 is arranged to that as much of the first surface 16a of prism 16 as possible can be viewed along lines of sight perpendicular to third surface 16c, in particular adjacent second surface 16b. Preferably the connecting surface(s) between third surface 16c and second surface 16b should preferably not block such lines of sight. If a single connecting surface is used, it may be perpendicular to the third surface 16c for example.

Although a device with a single prism 16 has been shown, it should be appreciated that, alternatively a series of prisms could be used with their third surfaces 16c in the same plane, and each prism in the series, except for the last prism in the series, with its fourth surface 16d facing the second surface 16b of the next prism. In this embodiment image detector 14 may form an image from light from the third surfaces 16c of all prisms in the series.

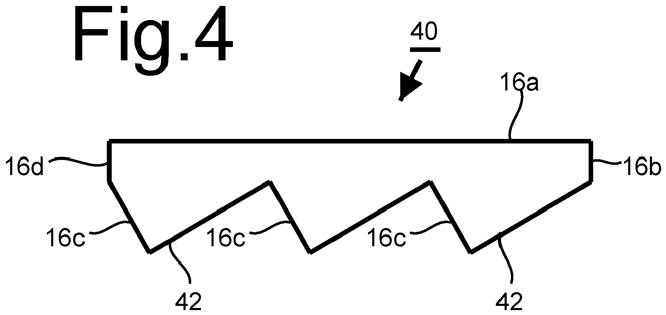

Figure 4 shows an embodiment wherein the effect of such a series of prisms is realized by means of a single body, that forms a multi-facetted prism 40. As used herein, the term "prism" is used to cover such a multi-facetted prism. Multi-facetted prism 40 has a first, second and fourth surface 16a, b, d oriented as described for figure 1 and a sawtooth cross-section with a plurality of third surfaces 16c, each oriented as described for figure 1. Preferably, fifth surfaces 42 that connect the third surfaces 16c are perpendicular to third surfaces 16c, or substantially parallel to the direction from which they are view by image detector 14. In this way it is possible to image the entire first surface 16a with a single image detector 14 using a prism with less height. As noted, the optical system of image detector 14 may be configured as a telecentric objective. Thus, fifth surfaces 42 may all be parallel to the ray paths.

However, it may be acceptable that fifth surfaces 42 are not parallel to the direction from which they are view by image detector 14. This may make scattering from some particles undetectable, but this need not affect usefulness of the indication of the number of particles.

The device may be used to monitor presence of particles in a space such as a clean room or other spaces. The number of particles that lands on surface under inspection 10 may be used as an indication of the degree to which such particles are present in the space. Preferably, in such an application, surface under inspection 10 faces upwards, i.e. so that the force of gravity at least has a component directed towards surface under inspection 10 and preferably so that surface under inspection 10 is perpendicular to the force of gravity. In this way particles from the space above surface under inspection 10 can land on surface under inspection 10 when moved by gravity.

## Claims

1. A system for observing particles that have landed on a surface under inspection on a first side of a plane of the surface under inspection, the system comprising
- a light source located on a second side of said plane, configured to supply light to the surface under inspection from the second side;
- a prism located on the second side of said plane for supplying the light from the light source to the surface under inspection, the surface under inspection being a first surface of the prism, or a surface of a transparent layer on the first surface of the prism;
- an image detector located on the second side of said plane, configured to form an image of the surface under inspection using scattering, due to the particles, of the light supplied to the surface under inspection into an optical path to the image detector;
wherein the prism has
- a second surface, the second surface being oriented to transmit light from the light source at a first grazing angle or first grazing angles to the surface under inspection;
- a third surface, the third surface being located in said optical path, a second angle between the normal to the third surface and the surface under inspection being less than ninety degrees;
- a fourth surface configured to receive all direct reflections of the light from for the surface under inspection, the second angle is larger than or equal to further angles between the normal of the second and fourth surface and the surface under inspection, wherein the third surface does not overlap with the fourth surface.

2. A system according to claim 1, wherein the third surface is oriented perpendicular to the axis of the optical path.

3. A system according to any of the preceding claims, wherein the angle between the normal to the third surface and the normal to the surface under inspection is greater than the critical angle for total internal reflection of the prism.

4. A system according to any of the preceding claims, wherein the angle between the normal to the third surface and the direction of maximum scattering intensity of the light from the light source by particles on the surface under inspection is smaller than the critical angle for total internal reflection of the prism.

5. A system according to any of the preceding claims, wherein the second angle is greater than fifteen degrees and the further angles are less than fifteen degrees.

6. A system according to claim 3, wherein the second angle is between fifteen degrees and forty-five degrees.

7. A system according to any of the preceding claims, comprising a light absorber or a light shield facing the fourth surface and/or light absorbing material in the prism outside the optical path to the image detector, in a further optical path of reflection of the light by the surface under inspection to the fourth surface.

8. A system according to any of the preceding claims, comprising a processing circuit configured to compute an indication of a number of locations in the image of the surface under inspection from which scattering occurs.

9. A system according to claim 8, wherein the processing circuit is configured to generate an alarm signal when said indication exceeds a first predetermined threshold and/or when a rate of change of said indication exceeds a second predetermined threshold.

10. A system according to any of the preceding claims, wherein the light source comprises a collimator configured to collimate the light transmitted to the prism.

11. A system according to any of the preceding claims, wherein the image detector comprises a tele-centric objective configured to form an image of the surface under inspection using parallel rays of scattered light from different positions on the surface under inspection.

12. A system according to any of the preceding claims, wherein the image detector comprises an imaging plane in a Scheimpflug relation to the surface under inspection.

13. Use of a system according to any of the preceding claims to monitor a particle concentration in a space above the surface under inspection, using a count of scattering positions on the surface under inspection as an indication of the particle concentration.
